# EUROPÄISCHE PATENTSCHRIFT

(11) **EP 2 993 450 B1**
(45) Veröffentlichungstag und Bekanntmachung des Hinweises auf die Patenterteilung: **10.10.2018**
(21) Anmeldenummer: 15182763.1
(22) Anmeldetag: 27.08.2015
(51) Int. Cl.: G01H 9/00

(54) **VERFAHREN UND ANORDNUNG ZUR ERFASSUNG VON AKUSTISCHEN UND OPTISCHEN INFORMATIONEN SOWIE EIN ENTSPRECHENDES COMPUTERPROGRAMM UND EIN ENTSPRECHENDES COMPUTERLESBARES SPEICHERMEDIUM**
METHOD AND ASSEMBLY FOR DETERMINATION OF ACOUSTIC AND OPTICAL INFORMATION, AND A CORRESPONDING COMPUTER PROGRAM AND A CORRESPONDING COMPUTER-READABLE STORAGE MEDIUM
PROCEDE ET SYSTEME DE DETECTION D'INFORMATIONS OPTIQUES ET ACOUSTIQUES ET PROGRAMME INFORMATIQUE CORRESPONDANT ET SUPPORT DE MEMOIRE LISIBLE PAR ORDINATEUR CORRESPONDANT

(30) Priorität: 03.09.2014 DE 102014217598
(43) Veröffentlichungstag der Anmeldung: 09.03.2016
(73) Patentinhaber: Gesellschaft zur Förderung angewandter Informatik e.V., 12489 Berlin (DE)
(72) Erfinder: Döbler, Dirk, 15754 Friedersdorf (Heidesee) (DE); Heilmann, Gunnar, 10317 Berlin (DE); Meyer, Andy, 10551 Berlin (DE)
(74) Vertreter: Gulde & Partner

(56) Entgegenhaltungen:
- EP-A1- 2 182 334
- DE-A1-102005 020 193

## Beschreibung

Die Erfindung betrifft ein Verfahren und eine Anordnung zur Erfassung von akustischen und optischen Informationen, welche insbesondere einsetzbar sind zur Erzeugung von dreidimensionalen Schallkarten. Die Schallkarten können visualisiert und mit Angaben zu Schallquellen, Schallleistung und Strahlercharakteristiken versehen werden.

### Stand der Technik

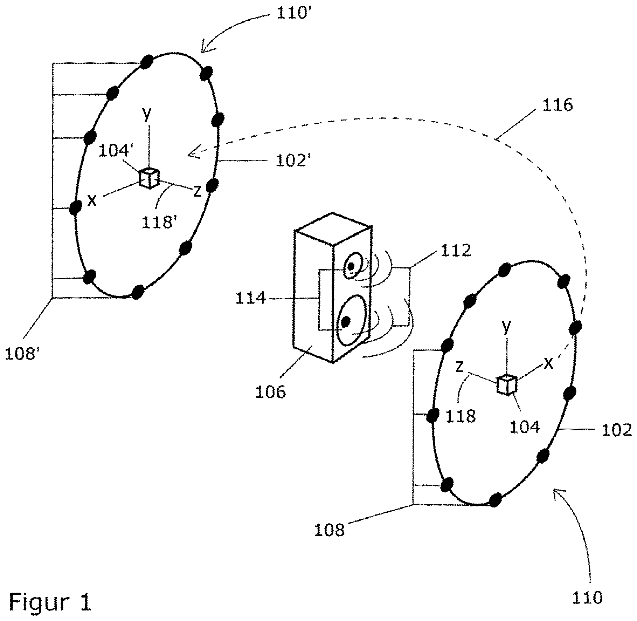

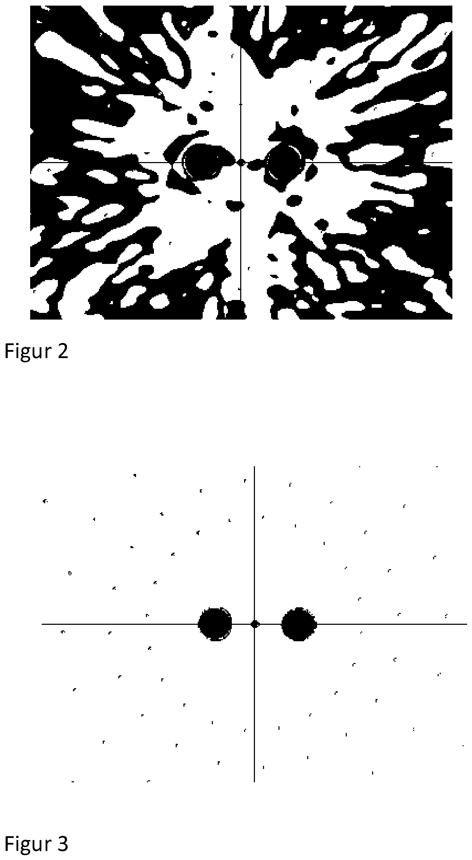

Beamforming mit Mikrofonarrays zur Schallquellenlokalisierung hat sich in den letzten 10 Jahren international zum Stand der Technik entwickelt. Dabei werden eine Anzahl Mikrofone fest mit einer oder mehreren Videokameras verbunden und parallel das Schallfeld und das Video digital aufgezeichnet. Aus den Daten der Mikrofone wird das Schallfeld mit verschiedenen rechnergestützten Signalverarbeitungsverfahren wieder in seine Einzelquellen zerlegt und die gewonnene akustische Karte mit dem Videobild überlagert. Auf diese Weise werden die Schallquellen den entsprechenden Objekten zugeordnet. Auch dreidimensionales Beamforming hat sich etabliert. Dabei wird zur Berechnung und Darstellung der Schallquellen ein 3D-Modell des schallemittierenden Objektes genutzt. Durch die räumliche Unterabtastung entstehen Nebenkeulen (Neben- oder Scheinquellen), welche die Dynamik der akustischen Karte einschränken und die Interpretation der akustischen Bilder erschweren. Räumliche Unterabtastung des Schallfeldes entsteht durch die aus Kosten- und Handhabungsgründen begrenzte Anzahl von Mikrofonen und des sich daraus ergebenden Empfangsmusters des Mikrofonarrays. Die akustische Karte ist dann immer eine Faltung des Empfangsmusters des Arrays mit dem tatsächlichen Schallfeld (Abb. 1 und Abb. 2). Theoretisch wäre eine sehr große Anzahl von Mikrofonen an vielen verschiedenen räumlichen Positionen erforderlich, um eine vollständige Abtastung zu gewährleisten. Da dies nicht möglich ist, existieren verschiedene erweiterte Signalverarbeitungsverfahren (CLEAN-SC, HDR, DAMAS, orthogonales Beamforming), welche die Ergebnisse verbessern können. Informationen, welche in den Messdaten nicht vorhanden sind, können aber auch durch ausgefeilte Algorithmen nicht rekonstruiert werden.

Durch die räumliche Unterabtastung können ebenfalls keine Aussagen über die Strahlercharakteristiken (Monopol, Dipol, Quadrupol) der ermittelten Schallquellen getroffen werden, da das Mikrofonarray nur von einer Position die Schallquelle vermisst. Diese Aussagen sind aber zur Beurteilung der Schallquellen wichtig.

Ebenfalls kann mit den bisherigen Verfahren keine Aussage über die abgestrahlte Schallleistung der ermittelten Schallquellen getroffen werden. Auch dazu müsste das abgestrahlte Schallfeld um die Quellen herum möglichst vollständig erfasst werden.

Für die korrekte Berechnung der Schallkarte ist außerdem der exakte Abstand jedes Mikrofons zu jedem Punkt der Oberfläche des Objektes zu ermitteln. Für planare Oberflächen wird meist direkt der Abstand des Mikrofonarrays zur Objektoberfläche bestimmt, wobei Oberfläche und Arrayachse senkrecht zueinander stehen müssen. Für stark tiefenstrukturierte Objekte oder Messungen in Innenräumen muss ein 3D-Modell vorliegen, dessen Bereitstellung zusätzlichen Aufwand erfordert. Außerdem muss hier noch ein Fitting erfolgen, d.h. die relative Lage des Mikrofonarrays zum 3D-Modell ist zu bestimmen.

Die EP 2182334 A1 beschreibt eine Messvorrichtung zum Erfassen von Geräuschquellen innerhalb eines definierten Raumes. Mit dem hier beschriebenen System müssen die Messungen zur Erfassung der Geometriedaten und die Messungen zur Erfassung der akustischen Daten nacheinander durchgeführt werden.

Die Aufgabe der Erfindung besteht somit darin, ein Verfahren sowie eine Anordnung zur Erfassung von akustischen und optischen Informationen bereitzustellen, welche die Nachteile der bekannten Lösungen beheben und es insbesondere ermöglichen, die Anzahl der räumlichen Abtastpunkte zu erhöhen, ohne die Zahl der physisch vorhandenen Mikrofone zu vergrößern.

Diese Aufgabe wird erfindungsgemäß durch die Merkmale in den Ansprüchen 1 und 8 gelöst. Zweckmäßige Ausgestaltungen der Erfindung sind in den Unteransprüchen enthalten. Ein besonderer Vorteil der Erfindung besteht u.a. darin, dass das Problem der räumlichen Unterabtastung des Schallfeldes von Objekten stark reduziert wird und damit Neben- oder Scheinquellen eliminiert werden. Dies wird dadurch erreicht, indem bei dem erfindungsgemäßen Verfahren mindestens ein Mikrofonarray und mindestens eine Vorrichtung zur Erfassung von optischen Geometriedaten eingesetzt werden. Das mindestens eine Mikrofonarray und die mindestens eine Vorrichtung zur Erfassung von optischen Geometriedaten sind dabei in einer definierten Lagebeziehung relativ zueinander angeordnet. Erfindungsgemäß sind das (die) Mikrofonarray(s) und die Vorrichtung(en) zur Erfassung von optischen Geometriedaten zumindest während der Erfassung von akustischen und optischen Informationen fest miteinander verbunden. Besonders vorteilhaft erweist es sich, wenn das (die) Mikrofonarray(s) und die Vorrichtung(en) zur Erfassung von optischen Geometriedaten lösbar miteinander verbunden sind.

Ein Mikrofonarray umfasst mindestens zwei Mikrophone, vorzugsweise jedoch eine Vielzahl von Mikrofonen, beispielsweise 48 Mikrofone bis zu 120 Mikrofonen. Die Anzahl der Mikrofone hängt dabei vom Einsatzgebiet, der Geometrie des Objekts und/oder von der Natur der Schallquelle ab und kann die Anzahl von 120 auch übersteigen.

In einer bevorzugten Ausführungsform ist vorgesehen, als Vorrichtung zur Erfassung von optischen Geometriedaten einen 3D-Scanner einzusetzen, beispielsweise einen Laserscanner. Als vorteilhaft erweist es sich, einen Streifenlichtscanner einzusetzen oder ein 3D-Kamerasystem, welches nach dem Laufzeitverfahren (Time Of Flight, TOF) arbeitet. Aus den erfassten 3D-Informationen wird vorzugsweise durch eine Datenverarbeitungseinrichtung ein 3D-Modell generiert.

Gemäß einer bevorzugten Ausführungsform ist weiter vorgesehen, dass neben dem mindestens einen Mikrofonarray und der mindestens einen Vorrichtung zur Erfassung von optischen Geometriedaten mindestens eine Kamera eingesetzt wird. Das hat den Vorteil, dass das generierte 3D-Modell mit den optischen (Farb-)Informationen kombiniert, insbesondere überlagert, werden kann.

Erfindungsgemäß werden die von dem Objekt emittierten akustischen Informationen bzw. Signale durch das mindestens eine Mikrofonarray erfasst, und die Geometrie, d.h. die Gestalt der Oberfläche des Objekts, wird durch die mindestens eine Vorrichtung zur Erfassung von optischen Geometriedaten erfasst. Dazu werden das (die) Mikrofonarray(s) und die Vorrichtung(en) zur Erfassung von optischen Geometriedaten einerseits und das Objekt andererseits relativ zueinander bewegt. Die (Relativ-)Bewegung kann manuell erfolgen. In einer alternativen Ausführungsform ist vorgesehen, dass die (Relativ-)Bewegung maschinell ausgeführt wird, vorzugsweise mit Hilfe einer automatischen Steuerung.

Vorzugsweise bleibt die relative Lagebeziehung zwischen dem mindestens einen Mikrofonarray und der mindestens einen Vorrichtung zur Erfassung von optischen Geometriedaten während der (Relativ-)Bewegung unverändert.

Vorzugsweise erfolgt die Erfassung der akustischen Informationen und der Geometrie des Objekts gleichzeitig. Gemäß einer bevorzugten Ausführungsform werden das (die) Mikrofonarray(s) und die Vorrichtung(en) zur Erfassung von optischen Geometriedaten in eine vorgebbare Anzahl von diskreten Positionen bewegt, in denen jeweils die akustischen und optischen Informationen erfasst werden. In einer alternativen Ausführungsform ist vorgesehen, dass die akustischen und optischen Informationen kontinuierlich während der (Relativ-)Bewegung erfasst werden.

In Abhängigkeit der zu erfassenden Objekte und/oder akustischen Informationen kann es sich als vorteilhaft erweisen, wenn die Erfassung der akustischen und optischen Informationen in zumindest einem Teil der verschiedenen Positionen mit jeweils einer unterschiedlichen relativen Lagebeziehung erfolgt.

Gemäß einer weiteren bevorzugten Ausführungsform werden für zumindest einen Teil der Erfassungspositionen, vorzugsweise für alle Erfassungspositionen, der räumliche Ort (absolute Ortskoordinaten x, y, z oder relative Ortskoordinaten x', y', z' bezüglich des Objektes) und die Orientierung (Winkelangaben, bspw. Eulerwinkel) des mindestens einen Mikrofonarrays und der mindestens einen Vorrichtung zur Erfassung von optischen Geometriedaten erfasst. Als vorteilhaft erweist es sich, wenn das mindestens eine Mikrofonarray und die mindestens eine Vorrichtung zur Erfassung von optischen Geometriedaten als ein System zusammengefasst werden und das System fest mit einem Koordinatensystem verknüpft wird. Zur Ermittlung der absoluten oder relativen Orts- und Winkelkoordinaten wird die Lage und Orientierung des mit dem System verknüpften Koordinatensystems mit einem Weltkoordinatensystem (absolute Koordinaten) oder mit einem Koordinatensystem, das mit dem Objekt verknüpft ist (relative Koordinaten), verglichen. Insbesondere ist vorgesehen, dass die relative Lagebeziehung des mindestens einen Mikrofonarrays und der mindestens einen Vorrichtung zur Erfassung von optischen Geometriedaten bezüglich des Objektes erfasst und aufgezeichnet wird. Insbesondere werden der Abstand des mindestens einen Mikrofonarrays und der mindestens einen Vorrichtung zur Erfassung von optischen Geometriedaten von dem Objekt und die Richtung des mindestens einen Mikrofonarrays und der mindestens einen Vorrichtung zur Erfassung von optischen Geometriedaten bezüglich des Objektes erfasst und, vorzugsweise als Trajektorie, aufgezeichnet.

Mit Hilfe der erfassten geometrischen Daten wird gemäß einer bevorzugten Ausführungsform durch Einsatz von computergestützten Berechnungsverfahren (Stitching) ein 3D-Modell des Objektes erzeugt. Vorzugsweise erfolgt die Erzeugung des 3D-Modells während der Erfassung der geometrischen Informationen. Insbesondere ist vorgesehen, aus (einzelnen) bereits erfassten Tiefenbildern das 3D-Modell zu berechnen. Das Aneinanderfügen der einzelnen 3D-Tiefenbilder zu einem Gesamtobjekt wird sehr erleichtert, wenn in das Messsystem ein 3D-Lageerfassungs- und Beschleunigungssensor (z.B. ein Gyroskop) integriert ist, welcher die Lage und die Bewegung (Trajektorie) der Vorrichtung zur Erfassung von optischen Geometriedaten (z.B. einer [optischen] Kamera) mit erfasst.

Aus den erfassten akustischen Informationen wird eine (Summen-)Schallkarte berechnet, wobei der Begriff "Summe" lediglich andeuten soll, dass die (Summen-)Schallkarte aus mehreren einzelnen Schallkarten erstellt wurde, eine Einschränkung auf ein Aufsummieren von Schallkarten ist nicht gemeint. Vorzugsweise wird die (Summen-)Schallkarte als dreidimensionale Schallkarte erzeugt. Gemäß einer bevorzugten Ausführungsform werden hierfür einzelne Schallkarten (Einzelschallkarten), die für verschiedene Positionen mit Hilfe von Beamformingalgorithmen berechnet wurden, kombiniert, vorzugsweise gewichtet aufsummiert und gemittelt. Vorzugsweise werden Abstrahlcharakteristiken von einzelnen Schallquellen in verschiedene Richtungen ermittelt. Gemäß einer weiteren bevorzugten Ausführungsform werden die Gesamtschallleistung und/oder die Schallleistung von Teilschallquellen des Objekts ermittelt. Als vorteilhaft erweist es sich, wenn hierfür die Einhüllende des Schallfeldes abgetastet wird. Gemäß einer weiteren bevorzugten Ausführungsform umfasst die Kombination der Einzelschallkarten die Eliminierung von Scheinschallquellen und/oder Reflexionen, vorzugsweise durch Mittelung.

Gemäß einer bevorzugten Ausführungsform ist weiter vorgesehen, dass zumindest ein Teil der Schallkarten, vorzugsweise alle Schallkarten, computerintern dem 3D-Modell überlagert bzw. auf das 3D-Modell projiziert wird. Insbesondere ist vorgesehen, dass die aus einzelnen Schallkarten kombinierte (Summen-)Schallkarte dem 3D-Modell überlagert bzw. auf das 3D-Modell projiziert wird. Dadurch wird erreicht, dass einzelne Schallquellen, vorzugsweise mit Schallcharakteristik und/oder Schalleistung, dem Objekt verbessert zugeordnet werden. Gemäß einer bevorzugten Ausführungsform werden zumindest Teile des 3D-Modells mit überlagerter bzw. projizierter (Summen-)Schallkarte visualisiert. Als vorteilhaft erweist es sich, wenn dabei Schallcharakteristiken durch eine optische Kennzeichnung, z.B. einen Pfeil, näher beschrieben werden.

Eine Anordnung nach der Erfindung weist mindestens einen Chip und/oder Prozessor, mindestens ein Mikrofonarray und mindestens eine Vorrichtung zur Erfassung von optischen Geometriedaten auf, wobei das mindestens eine Mikrofonarray und die mindestens eine Vorrichtung zur Erfassung von optischen Geometriedaten in definierter Lagebeziehung angeordnet sind, und ist derart eingerichtet, dass ein Verfahren zur Erfassung von akustischen und optischen Informationen ausführbar ist, wobei von einem Objekt emittierte akustische Informationen und die Geometrie des Objektes erfasst werden, indem das mindestens eine Mikrofonarray, die mindestens eine Vorrichtung zur Erfassung von optischen Geometriedaten und das Objekt relativ zueinander bewegt werden.

Gemäß einer bevorzugten Ausführungsform umfasst die Anordnung einen 3D-Lageerfassungs- und Beschleunigungssensor (vorzugsweise ein Gyroskop). Vorzugsweise ist der 3D-Lageerfassungs- und Beschleunigungssensor in die Vorrichtung zur Erfassung von optischen Geometriedaten integriert. Somit kann die Trajektorie der Anordnung, insbesondere der Vorrichtung zur Erfassung von optischen Geometriedaten während der Erfassung der akustischen und optischen Informationen für zumindest einzelne, vorzugsweise für alle, Positionen der Anordnung bzw. der Vorrichtung zur Erfassung von optischen Geometriedaten ebenfalls erfasst und vorzugsweise aufgezeichnet werden. In einer bevorzugten Ausführungsform ist vorgesehen, zumindest die von dem 3D-Lageerfassungs- und Beschleunigungssensor erfassten 3D-Lagedaten (insbesondere Orts- und Winkelkoordinaten) zu nutzen, um aus den Tiefenbildern das 3D-Modell des Objektes zu berechnen.

Ein erfindungsgemäßes Computerprogramm ermöglicht es einer Datenverarbeitungseinrichtung, nachdem es in den Speicher der Datenverarbeitungseinrichtung geladen worden ist, im Zusammenwirken mit mindestens ein Mikrofonarray und mindestens eine Vorrichtung zur Erfassung von optischen Geometriedaten, die in definierter Lagebeziehung zueinander angeordnet sind, ein Verfahren zur Erfassung von akustischen und optischen Informationen durchzuführen, wobei von einem Objekt emittierte akustische Informationen und die Geometrie des Objektes erfasst werden, indem das mindestens eine Mikrofonarray, die mindestens eine Vorrichtung zur Erfassung von optischen Geometriedaten und das Objekt relativ zueinander bewegt werden.

In einer weiteren bevorzugten Ausführungsform der Erfindung ist vorgesehen, dass das erfindungsgemäße Computerprogramm modular aufgebaut ist, wobei einzelne Module auf verschiedenen Datenverarbeitungseinrichtungen installiert sind.

Vorteilhafte Ausführungsformen sehen zusätzlich Computerprogramme vor, durch welche weitere in der Beschreibung angegebene Verfahrensschritte oder Verfahrensabläufe ausgeführt werden können.

Solche Computerprogramme können beispielsweise (gegen Gebühr oder unentgeltlich, frei zugänglich oder passwortgeschützt) downloadbar in einem Daten- oder Kommunikationsnetz bereitgestellt werden. Die so bereitgestellten Computerprogramme können dann durch ein Verfahren nutzbar gemacht werden, bei dem ein Computerprogramm nach Anspruch 10 aus einem elektronischen Datennetz, wie beispielsweise aus dem Internet, auf eine an das Datennetz angeschlossene Datenverarbeitungseinrichtung heruntergeladen wird.

Um das erfindungsgemäße Verfahren durchzuführen, ist vorgesehen, ein computerlesbares Speichermedium einzusetzen, auf dem ein Programm gespeichert ist, das es einer Datenverarbeitungseinrichtung ermöglicht, nachdem es in den Speicher der Datenverarbeitungseinrichtung geladen worden ist, im Zusammenwirken mit mindestens ein Mikrofonarray und mindestens eine Vorrichtung zur Erfassung von optischen Geometriedaten, die in definierter Lagebeziehung zueinander angeordnet sind, ein Verfahren zur Erfassung von akustischen und optischen Informationen durchzuführen, wobei von einem Objekt emittierte akustische Informationen und die Geometrie des Objektes erfasst werden, indem das mindestens eine Mikrofonarray, die mindestens eine Vorrichtung zur Erfassung von optischen Geometriedaten und das Objekt relativ zueinander bewegt werden.

Die Erfindung bietet gegenüber dem Stand der Technik eine Anzahl von Vorteilen. So wird das schallemittierende Objekt während der akustischen Messung gescannt und als 3D-Modell abgespeichert. Vorzugsweise wird das Objekt dreidimensional gescannt. Alternativ kann aber auch vorgesehen sein, dass das 3D-Modell aus den optischen (2D-)Informationen erzeugt wird. Ein zusätzlicher 3D-Scan entfällt. Da die relative Lage des Mikrofonarrays zum Objekt aufgezeichnet wurde, entfallen auch das Messen des Abstandes und das Fitting des Arrays relativ zum Objekt.

Das (stationäre) Schallfeld wird aus vielen unterschiedlichen Positionen erfasst. Durch gewichtete Summation und Mittelung einer großen Zahl von Schallkarten (mit der Kinect etwa 25 Schallkarten/s) werden die tatsächlichen Quellen eindeutig identifiziert, Nebenkeulen (Scheinquellen) und Reflexionen mitteln sich heraus. Die Qualität des akustischen Bildes entspricht dem Ergebnis einer viel aufwändigeren tatsächlichen Erhöhung der Mikrofonzahl.

Durch die aufgezeichnete Bewegungstrajektorie sind die korrekten Abstände der Mikrofone zum schallemittierenden Objekt zu jedem Zeitpunkt bekannt. Fokusfehler entfallen, Quellstärken können exakt bestimmt werden

Durch die Vermessung der Schallquellen aus vielen unterschiedlichen Richtungen sind Aussagen über die Strahlercharakteristiken der Schallquellen möglich. Diese können in der erstellten dreidimensionalen Schallkarte mit eingezeichnet werden, z.B. in Form von Richtungspfeilen, wobei die Länge der Pfeile die Abstrahlstärke der Quelle in der entsprechenden Richtung angibt.

Durch das Abtasten der "Einhüllenden" des Schallfeldes können Aussagen über die Gesamtschallleistung als auch über die Schallleistungen der Teilschallquellen getroffen werden.

Die Erfindung wird nachfolgend unter Bezugnahme auf die Figuren der Zeichnungen an einem Ausführungsbeispiel näher erläutert. Es zeigt:
- Figur 1: eine schematische Veranschaulichung des erfindungsgemäßen Verfahrens;
- Figur 2: eine beispielhafte Visualisierung des Schallfeldes zweier Schallquellen, welches mit einem 48-Kanal-Mikrofonarray aufgenommen wurde, und .
- Figur 3: eine beispielhafte Visualisierung des Schallfeldes zweier Schallquellen, welches mit einem 120-Kanal-Mikrofonarray aufgenommen wurde.

Nachfolgend soll die Erfindung anhand einer beispielhaften Ausführungsform näher erläutert werden. Gemäß dem Ausführungsbeispiel wird ein ringförmiges Mikrofonarray 102, 102', welches in einer definierten Lagebeziehung zu einem oder mehreren 3D-Scannern 104, 104' angeordnet ist, um ein Objekt 106 herumgeführt. Als Mikrofonarray können anstelle des ringförmigen Mikrofonarrays 102, 102' auch lineare, kreuzförmige, sphärische Mikrofonarrays oder Arrays mit zufällig verteilten Mikrofonen 108, 108' eingesetzt werden. Ebenso können anstelle des mindestens einen 3D-Scanners 104, 104' eine oder mehrere Videokameras eingesetzt werden. Beim Einsatz von Videokameras wird das schallemittierende Objekt zweidimensional erfasst und das 3D-Modell des Objektes beispielsweise durch photogrammetrische 3D-Rekonstruktion erzeugt, wie es beispielsweise in der Veröffentlichung: Rodehorst, Volker: Photogrammetrische 3D-Rekonstruktion im Nahbereich durch Auto-Kalibrierung mit projektiver Geometrie, Wissenschaftlicher Verlag, Berlin 2004 beschrieben wird.

Ebenso kann das beispielhafte Verfahren auch dahingehend modifiziert werden, dass nicht das Mikrofonarray 102, 102' um das Objekt 106 herumgeführt wird, sondern dass sich das Objekt bezüglich eines stationär angeordneten Mikrofonarrays 102, 102' bewegt. Es können sich auch sowohl das Mikrofonarray 102, 102' als das Objekt 106 während der Erfassung der akustischen und optischen Informationen bewegen.

Die Erfindung schlägt eine Vorrichtung und ein Verfahren vor, mit deren Hilfe es möglich ist, die Anzahl der räumlichen Abtastpunkte erheblich zu steigern, ohne die Zahl der physisch vorhandenen Mikrofone 108, 108' tatsächlich zu erhöhen. Dazu werden Mikrofone 108, 108' in einer definierten relativen Lage mit einem oder mehreren 3D-Scannern 104, 104' mit integrierter Lageerfassung mechanisch verbunden. Vorzugsweise sind die Mikrofone 108, 108' und der mindestens eine 3D-Scanner 104, 104' mechanisch fest aber lösbar miteinander verbunden. Weiter wird vorzugsweise während der Erfassung der akustischen und optischen Informationen die Lagebeziehung der Mikrofone 108, 108' bezüglich des mindestens einen 3D-Scanners 104, 104' nicht verändert. Die Vorrichtung 110, 110' aus Mikrofonen 108, 108' und 3D-Scanner(n) 104, 104' wird nun um das zu vermessende Objekt 106 manuell oder maschinell herumgeführt, um das Schallfeld 112 mit den Mikrofonen 108, 108' an vielen unterschiedlichen Orten und aus vielen unterschiedlichen Richtungen abzutasten. Dazu sollte sich das Objekt 106 natürlich nicht bewegen und die Schallquellen 114 des Objektes 106 zumindest repetierend stationär sein. Gleichzeitig findet mit dem integrierten 3D-Scanner 104, 104' eine dreidimensionale Erfassung des schallemittierenden Objektes 106 statt, wobei die aufgenommenen einzelnen Tiefenbilder während des Scanprozesses zu einem Gesamtmodell verrechnet werden (Stitching). Position und Richtung des 3D-Scanners 104, 104' (Lageerfassung)und damit die Mikrofonpositionen bezüglich des 3D-Objektes 106 werden während der Messung ebenfalls mit aufgezeichnet (Bewegungstrajektorie 116). Hierfür wird vorzugsweise die Vorrichtung 110, 110' mit einem Koordinatensystem 118, 118' verknüpft. Bezüglich des Koordinatensystems 118, 118' sind die lokalen Mikrofonkoordinaten (Ort und Winkel) und die lokalen Scannerkoordinaten (Ort und Winkel) bekannt. Die Lage (Ort) und Orientierung (Winkel) des Koordinatensystems 118, 118' wird in den Erfassungspositionen, d.h. in den Positionen, in denen akustische und/oder optische Informationen erfasst werden, ebenfalls erfasst und abgespeichert.

Als 3D-Scanner 106 kann beispielsweise eine für die Bewegungssteuerung von Computerspielen eingesetzte Kamera (z.B. eine Kinect®-Kamera von Microsoft™) eingesetzt werden, dieser Scanner liefert auch normale Kamerabilder (Video) während der Messung, so dass das Mikrofonarray 102, 102' ohne Umbauten auch für 2D-Anwendungen einsetzbar ist.

In der anschließenden Auswertung werden nun für jede Position des 3D-Scanners 104, 104' die entsprechenden Mikrofonkoordinaten ermittelt. Damit wird mit den bekannten Beamformingalgorithmen für jede Position des Mikrofonarrays 102, 102' eine Schallkarte berechnet und auf das 3D-Modell des Objektes 106 projiziert. Dabei werden verdeckte Bereiche (Abschattungen, die vom 3D-Scanner 104, 104' aus der jeweiligen Position nicht erfasst werden können) nicht berechnet. Die aus den verschiedenen Arraypositionen berechneten einzelnen Schallkarten werden anschließend gewichtet aufsummiert und gemittelt. Dabei können dann die Abstrahlcharakteristiken der Schallquellen 114 in die verschiedenen Richtungen berechnet werden.

Natürlich kann die Vorrichtung 110, 110' auch ortsfest benutzt werden, wobei sich dann die zu scannenden Objekte 106 bewegen. In einer weiteren Ausführung können dann sowohl die Vorrichtung 110, 110' als auch die Messobjekte 106 statisch angeordnet werden. Die Szene wird dann nur von einer Position dreidimensional erfasst. Zusätzlich zu einem Foto oder Video der Szene wird dann zu jedem Bild eine Tiefeninformation geliefert.

Die Erfindung beschränkt sich in ihrer Ausführungsform nicht auf die vorstehend angegebenen bevorzugten Ausführungsbeispiele. Vielmehr ist eine Anzahl von Varianten denkbar, die von der erfindungsgemäßen Anordnung, dem erfindungsgemäßen Verfahren, dem erfindungsgemäßen Computerprogramm und dem erfindungsgemäßen computerlesbaren Speichermedium auch bei grundsätzlich anders gearteten Ausführungen Gebrauch macht.

### Bezugszeichen

- 102: Mikrofonarray
- 102': Mikrofonarray
- 104: 3D-Scanner
- 104': 3D-Scanner
- 106: Objekt
- 108: Mikrofon
- 108': Mikrofon
- 110: Vorrichtung
- 110': Vorrichtung
- 112: Schallfeld
- 114: Schallquellen
- 116: Bewegungstrajektorie
- 118: Koordinatensystem
- 118': Koordinatensystem

## Patentansprüche

1. Verfahren zur Erfassung von akustischen und optischen Informationen mittels mindestens eines Mikrofonarrays (102, 102') und mindestens einer als 3D-Scanner oder 3D-Kamerasystem ausgebildeten Vorrichtung zur Erfassung von optischen Geometriedaten, wobei das mindestens eine Mikrofonarray (102, 102') und die mindestens eine Vorrichtung zur Erfassung von optischen Geometriedaten in definierter Lagebeziehung angeordnet sind und wobei das mindestens eine Mikrofonarray (102, 102') und die mindestens eine Vorrichtung zur Erfassung von optischen Geometriedaten zumindest während der Erfassung der akustischen und optischen Informationen fest miteinander verbunden sind, wobei:
- die von einem Objekt (106) emittierten akustischen Informationen und die Geometrie des Objektes (106) gleichzeitig erfasst werden;
- das Mikrofonarray (102, 102') und die mindestens eine Vorrichtung zur Erfassung von optischen Geometriedaten und das Objekt (106) relativ zueinander bewegt werden.

2. Verfahren nach Anspruch 1, wobei die Erfassung der akustischen und optischen Informationen mit einer unveränderten Lagebeziehung erfolgt, oder wobei die Erfassung der akustischen und optischen Informationen mit verschiedenen Lagebeziehungen erfolgt.

3. Verfahren nach Anspruch 1 oder 2, wobei das mindestens eine Mikrofonarray (102, 102'), die mindestens eine Vorrichtung zur Erfassung von optischen Geometriedaten und/oder das Objekt (106) manuell oder maschinell bewegt werden.

4. Verfahren nach einem der voranstehenden Ansprüche, wobei für zumindest einzelne Positionen des mindestens einen Mikrofonarray (102, 102') und der mindestens einen Vorrichtung zur Erfassung von optischen Geometriedaten Orts- und/oder Winkelkoordinaten erfasst und, vorzugsweise als Trajektorie (116), aufgezeichnet werden.

5. Verfahren nach einem der voranstehenden Ansprüche, wobei aus Tiefenbilder, die aus erfassten optischen Geometriedaten erzeugt wurden, ein 3D-Modell generiert wird, vorzugsweise computergestützt und automatisch.

6. Verfahren nach einem der voranstehenden Ansprüche, wobei aus den durch das mindestens eine Mikrofonarray (102, 102') in zumindest einem Teil der Positionen erfassten akustischen Informationen jeweils eine Einzelschallkarte erzeugt und aus zumindest einem Teil der Einzelschallkarten eine gemeinsame Schallkarte berechnet wird, wobei vorzugsweise Schallcharakteristiken und/oder Schallleistungen von Schallquellen berechnet werden.

7. Verfahren nach einem der Ansprüche 4 bis 6, wobei die Orts-, die Winkelkoordinaten, die einzelnen Tiefenbilder und/oder die Einzelschallkarten in diskreten Erfassungspositionen oder kontinuierlich erfasst werden.

8. Anordnung zur Erfassung von akustischen und optischen Informationen, umfassend
- mindestens eine Datenverarbeitungseinrichtung,
- mindestens ein Mikrofonarray (102, 102') und
- mindestens eine als 3D-Scanner oder 3D-Kamerasystem ausgebildete Vorrichtung zur Erfassung von optischen Geometriedaten,
wobei das mindestens eine Mikrofonarray (102, 102') und die mindestens eine Vorrichtung zur Erfassung von optischen Geometriedaten in definierter Lagebeziehung angeordnet sind, **dadurch gekennzeichnet, dass** das mindestens eine Mikrofonarray (102, 102') und die mindestens eine Vorrichtung zur Erfassung von optischen Geometriedaten zumindest während der Erfassung der akustischen und optischen Informationen fest miteinander verbunden sind, und dass die Anordnung derart konfiguriert ist, dass ein Verfahren gemäß einem der Ansprüche 1 bis 7 ausführbar ist.

## Claims

1. A method for the determination of acoustic and optical information by means of at least one microphone array (102, 102') and at least one device designed as a 3D scanner or 3D camera system for capturing optical geometry data, whereby the at least one microphone array (102, 102') and the at least one device for capturing optical geometry data is arranged in a defined position arrangement and whereby the at least one microphone array (102, 102') and the at least one device for capturing optical geometry data are firmly interconnected at least during the capturing of the acoustic and optical information, whereby:
- the acoustic information emitted from an object (106) and the geometry of the object (106) are captured simultaneously;
- the microphone array (102, 102') and the at least one device for capturing optical geometry data and the object (106) can be moved relative to each other.

2. The method according to Claim 1, whereby the capturing of the acoustic and optical information is conducted with an unchanged position relationship, or whereby the capturing of the acoustic and optical information is conducted with different position relationships.

3. The method according to Claim 1 or 2, whereby the at least one microphone array (102, 102'), the at least one device for capturing optical geometry data and/or the object (106) are manually or mechanically moved.

4. The method according to any one of the preceding claims, whereby for at least individual positions of the at least one microphone array (102, 102') and the at least one device for capturing optical geometry data, location and/or angle coordinates are captured and recorded, preferably as a trajectory (116).

5. The method according to any one of the preceding claims, whereby from depth images generated from captured optical geometry data, a 3D model is produced, preferably computer-aided and automatically.

6. The method according to any one of the preceding claims, whereby from the acoustic information captured by the at least one microphone array (102, 102') in at least one part of the positions, one individual sound map is generated respectively and from at least one part of the individual sound maps, a shared sound map is calculated, whereby preferably sound characteristics and/or sound power levels of sound sources are calculated.

7. The method according to any one of Claims 4 to 6, whereby the location coordinates, the angle coordinates, the individual depth images and/or the individual sound maps are captured in discreet capturing positions or continuously.

8. An arrangement for the recording of acoustic and optical information, comprising
- at least one data processing facility,
- at least one microphone array (102, 102') and
- at least one device designed as a 3D scanner or 3D camera system for capturing optical geometry data,
whereby the at least one microphone array (102, 102') and the at least one device for capturing optical geometry data are arranged in a defined position relationship, **characterized in that** the at least one microphone array (102, 102') and the at least one device for capturing optical geometry data are firmly interconnected at least during the capturing of the acoustic and optical information, and that the arrangement is configured such that a method according to any one of Claims 1 to 7 is executable.

## Revendications

1. Procédé de détection d'informations acoustiques et optiques au moyen d'au moins un réseau de microphones (102, 102') et d'au moins un dispositif réalisé comme scanner 3D ou système de caméra 3D pour la détection de données géométriques optiques, où ledit au moins un réseau de microphones (102, 102') et ledit au moins un dispositif pour la détection de données géométriques optiques sont agencés suivant une relation entre positions définie, et où ledit au moins un réseau de microphones (102, 102') et ledit au moins un dispositif pour la détection de données géométriques optiques sont fixement raccordés l'un à l'autre au moins pendant la détection des données acoustiques et optiques, où :
- les informations acoustiques émises par un objet (106) et la géométrie de l'objet (106) sont détectées simultanément ;
- le réseau de microphones (102, 102') et ledit au moins un dispositif pour la détection de données géométriques optiques et l'objet (106) sont déplacés les uns par rapport aux autres.

2. Procédé selon la revendication 1, où la détection des données acoustiques et optiques est effectuée avec une relation entre positions inchangée, ou où la détection des données acoustiques et optiques est effectuée avec différentes relations entre positions.

3. Procédé selon la revendication 1 ou 2, où ledit au moins un réseau de microphones (102, 102'), ledit au moins un dispositif pour la détection de données géométriques optiques et/ou l'objet (106) sont déplacés manuellement ou mécaniquement.

4. Procédé selon l'une quelconque des revendications précédentes, où des coordonnées de localisation et/ou des coordonnées angulaires sont détectées, et sont préférentiellement enregistrées comme trajectoires (116) pour au moins des positions individuelles dudit au moins un réseau de microphones (102, 102') et dudit au moins un dispositif pour la détection de données géométriques optiques.

5. Procédé selon l'une quelconque des revendications précédentes, où un modèle 3D est généré, préférentiellement de manière assistée par ordinateur et automatiquement, sur la base d'images en profondeur générées à partir des données géométriques optiques détectées.

6. Procédé selon l'une quelconque des revendications précédentes, où des cartes sonores individuelles respectives sont générées sur la base des informations acoustiques détectées par ledit au moins un réseau de microphones (102, 102') dans au moins une partie des positions, et où une carte sonore commune est calculée à partir d'au moins une partie des cartes sonores individuelles, des caractéristiques sonores et/ou des puissances acoustiques de sources sonores étant préférentiellement calculées.

7. Procédé selon l'une des revendications 4 à 6, les coordonnées de localisation, les coordonnées angulaires, les différentes images en profondeur et/ou les cartes sonores individuelles sont détectées à des positions de détection discrètes ou de manière continue.

8. Système pour la détection d'informations acoustiques et optiques, comprenant
- au moins un dispositif de traitement de données,
- au moins un réseau de microphones (102, 102') et
- au moins un dispositif pour la détection de données géométriques optiques réalisé comme scanner 3D ou système de caméra 3D,
où ledit au moins un réseau de microphones (102, 102') et ledit au moins un dispositif pour la détection de données géométriques optiques sont agencés suivant une relation entre positions définie, **caractérisé en ce que** ledit au moins un réseau de microphones (102, 102') et ledit au moins un dispositif pour la détection de données géométriques optiques sont fixement raccordés l'un à l'autre au moins pendant la détection des données acoustiques et optiques, et **en ce que** le système est configuré de manière à rendre exécutable un procédé selon l'une des revendications 1 à 7.
